# FASCICULE DE BREVET EUROPEEN

(11) **EP 1 899 578 B1**
(45) Date de publication et mention de la délivrance du brevet: **23.09.2015**
(21) Numéro de dépôt: 06778646.7
(22) Date de dépôt: 23.06.2006
(51) Int. Cl.: F01B 17/02, F02B 29/04

(54) **GROUPE MOTO-COMPRESSEUR BASSES TEMPERATURES À COMBUSTION « FROIDE » CONTINUE A PRESSION CONSTANTE ET A CHAMBRE ACTIVE**
NIEDRIGTEMPERATURMOTORKOMPRESSOREINHEIT MIT KONTINUIERLICHER KALTVERBRENNUNG BEI KONSTANTEM DRUCK UND MIT AKTIVER KAMMER
LOW-TEMPERATURE MOTOR COMPRESSOR UNIT WITH CONTINUOUS "COLD" COMBUSTION AT CONSTANT PRESSURE AND WITH ACTIVE CHAMBER

(30) Priorité: 24.06.2005 FR 0506437
(43) Date de publication de la demande: 19.03.2008
(73) Titulaire: Motor Development International S.A., 1212 Luxembourg (LU)
(72) Inventeur: NEGRE, Guy, F-06516 Carros Cedex (FR); NEGRE, Cyril, F-06516 Carros Cedex (FR)
(74) Mandataire: Gevers France
(86) Numéro de dépôt international: PCT/FR2006/001444
(87) Numéro de publication internationale: WO 2006/136728

(56) Documents cités:
- WO-A-2005/049968
- DE-A1- 3 219 797
- DE-A1- 19 962 591
- GB-A- 1 300 000
- US-B1- 6 675 781

## Description

L'invention concerne un groupe moto-compresseur fonctionnant notamment avec de l'air comprimé et, plus particulièrement, utilisant un dispositif de contrôle de la course du piston ayant pour effet l'arrêt du piston à son point mort haut durant une période de temps et de rotation moteur, ainsi qu'une chambre active à volume variable produisant un travail, un dispositif de compression intégré (ou non) et un dispositif de récupération d'énergie thermique ambiante pouvant fonctionner en mono énergie carburant ou air comprimé ou en biénergie carburant et air comprimé simultanément ou successivement.

Le rédacteur a déposé de nombreux brevets concernant des motorisations ainsi que leurs installations, utilisant de l'air comprimé pour un fonctionnement totalement propre en site urbain et suburbain :
- WO 96/27737 WO 97/00655 WO 97/39232
- WO 97/48884 WO 98/12062 WO 98/15440
- WO 98/32963 WO 99/37885

Pour la mise en oeuvre de ces inventions, il a également décrit dans sa demande de brevet WO 99/63206 au contenu duquel on pourra se reporter, un procédé et dispositif de contrôle de la course des pistons de moteur permettant l'arrêt du piston à son point mort haut; procédé également décrit dans sa demande de brevet WO 99/20881 au contenu duquel on pourra également se reporter concernant le fonctionnement de ces moteurs en mono énergie ou en bi-énergie bi ou tri modes d'alimentation.

Dans sa demande de brevet WO 99/37885 au contenu duquel on pourra également se reporter, il propose une solution qui permet d'augmenter la quantité d'énergie utilisable et disponible caractérisée par le fait que l'air comprimé, avant son introduction dans la chambre de combustion et ou d'expansion, provenant du réservoir de stockage soit directement soit après son passage dans le ou les échangeurs thermiques du dispositif de récupération d'énergie thermique ambiante, et avant son introduction dans la chambre de combustion est canalisé dans un réchauffeur thermique où, par accroissement de sa température, il va augmenter encore de pression et/ou de volume avant son introduction dans la chambre de combustion et/ou d'expansion du moteur, augmentant encore ainsi considérablement les performances pouvant être réalisées par ledit moteur.

L'utilisation d'un réchauffeur thermique, et malgré l'utilisation d'un carburant fossile, présente l'avantage de pouvoir utiliser des combustions continues propres qui peuvent être catalysées ou dépolluées par tous moyens connus dans le but d'obtenir des émissions de polluant infimes.

L'auteur a déposé un brevet Nr WO 03/036088 au contenu duquel on pourra se reporter, concernant un groupe moto-compresseur - moto alternateur à injection d'air comprimé additionnel fonctionnant en mono et pluri énergies.

Dans ces types de moteur fonctionnant avec de l'air comprimé et comportant un réservoir d'air comprimé haute pression, il est nécessaire de détendre l'air comprimé contenu dans le réservoir haute pression mais dont la pression diminue à mesure que le réservoir se vide à une pression intermédiaire stable dite pression finale d'utilisation dans une capacité tampon avant son utilisation dans le ou les cylindres moteur. Les détendeurs conventionnels à clapets et ressorts bien connus ont des débits très faibles, et leur utilisation pour cette application demande des appareils très lourds et peu performants, en outre ils sont très sensibles au givrage dû à l'humidité de l'air refroidi lors de la détente.

Pour résoudre ce problème, l'auteur a également déposé un brevet WO 03/089764, au contenu duquel on pourra se reporter, concernant un détendeur dynamique à débit variable pour moteurs alimentés avec injection d'air comprimé, comportant un réservoir d'air comprimé haute pression, et une capacité de travail.

L'auteur a également déposé un brevet WO 02/070876 concernant une chambre d'expansion à volume variable constituée de deux capacités distinctes dont l'une est en communication avec l'arrivée d'air comprimé et l'autre jumelée avec le cylindre et pouvant être mise en communication entre elles ou isolées de telle sorte que durant le cycle échappement il est possible de charger en air comprimé la première de ces capacités puis d'établir la pression dans la deuxième, dès la fin de l'échappement alors que le piston est arrêté à son point mort haut et avant la reprise de sa course, les deux capacités restant en communication et se détendant ensemble pour effectuer le temps moteur et que, l'une des ces deux capacités est pourvue de moyens permettant de modifier leur volume pour permettre, à pression égale, de faire varier le couple résultant du moteur.

Dans ces dispositifs à détente de charge le remplissage de la chambre représente toujours une détente nuisible au rendement général de la machine.

Pour résoudre ce dernier problème, le rédacteur a également déposé un brevet WO 2005/049968 concernant un moteur à chambre active qui utilise un dispositif d'arrêt du piston au point mort haut, il est alimenté préférentiellement par de l'air comprimé ou tout autre gaz comprimé contenu dans un réservoir de stockage haute pression, à travers une capacité tampon dite capacité de travail, La capacité de travail en version bi énergie comporte un dispositif de réchauffage de l'air alimenté par une énergie additionnelle (fossile ou autre énergie) permettant d'augmenter la température et le volume de l'air qui le traverse. La capacité de travail est donc une chambre de combustion externe.

Dans ce type de moteur la chambre d'expansion interne au moteur est constituée d'un volume variable équipé de moyens permettant de produire un travail et est jumelée et en contact par un passage permanent avec l'espace compris au dessus du piston moteur principal. Durant l'arrêt du piston moteur à son point mort haut, l'air de travail sous pression est admis dans la chambre d'expansion alors que celle-ci est à son plus petit volume et, que, sous la poussée, elle va augmenter de volume en produisant un travail, puis l'air comprimé de travail contenu dans ladite chambre d'expansion, se détend ensuite dans le cylindre moteur repoussant ainsi le piston moteur et fournissant un travail à son tour alors que durant la remontée du piston moteur pendant le temps échappement le volume variable de la chambre d'expansion est ramené à son plus petit volume pour recommencer un cycle de travail complet.

Le cycle thermodynamique d'un moteur à chambre active comprend donc quatre phases en mode mono énergie air comprimé :
- Une détente isotherme sans travail
- Un transfert-légère détente avec travail dit quasi isotherme
- Une détente polytropique avec travail
- Un échappement à pression quasi ambiante.

Dans son application bi énergie et en mode carburant additionnel un compresseur d'air alimente soit le réservoir haute pression soit la capacité de travail (chambre de combustion) soit encore les deux volumes en combinaison.

Le moteur à chambre active est également réalisable en mono énergie à carburant fossile. Dans une version telle que décrite ci-dessus, le réservoir de stockage d'air comprimé haute pression est alors purement et simplement supprimé.

Le moteur à chambre active est un moteur à chambre de combustion externe, toutefois, la combustion dans le réchauffeur peut être soit interne dite «externe interne » en amenant la flamme directement au contact de l'air comprimé de travail soit externe dite « externe externe » en réchauffant l'air de travail au travers d'un échangeur. Ce type de moteur fonctionne en combustion à pression constante et à volume variable selon les relations :
PV1 = nRT1
PV2 = nRT2
D'où pour P constante V1/ V2 = T1/T2

L'augmentation de température à pression constante a pour effet d'augmenter dans la même proportion le volume d'air comprimé et une augmentation de volume de N fois demandera une augmentation de température de N fois identique.

En mode bi énergie et fonctionnement autonome avec énergie additionnelle, et lorsque l'air comprimé est admis dans le réservoir haute pression, le cycle thermodynamique comprend alors sept phases :
- Aspiration
- Compression
- Détente isotherme dans la capacité de travail
- Augmentation de la température
- Transfert- légère détente avec travail (dit quasi isotherme)
- Détente polytropique avec travail
- Echappement à pression quasi ambiante

Lorsque l'air comprimé est admis directement dans la capacité de travail ou chambre de combustion, le cycle thermodynamique comprend six phases et devient :
- Aspiration
- Compression
- Augmentation de la température
- Transfert-légère détente avec travail dit quasi isotherme
- Détente polytropique avec travail
- Echappement à pression quasi ambiante

Dans ce type de moteur en application bi-énergie, la température de l'air comprimé admis dans la capacité de travail ou chambre de combustion s'effectue à une température égale ou supérieure à l'ambiante, sensiblement égale si l'air comprimé provient du réservoir de stockage haute pression et supérieure s'il provient directement du compresseur et l'augmentation de volume est effectué dans la phase suivante du cycle par augmentation de la température.

En provenant directement du compresseur la température de l'air peut atteindre des valeurs de l'ordre de 400°C au-dessus de l'ambiante.

Pour fixer les idées, à titre d'exemple non limitatif, dans le but d'alimenter une chambre active de 30cc sous 30 bar, une charge d'air comprimé de 5 cm³ est prélevée d'un réservoir de stockage pour être introduite dans une chambre de travail et de réchauffe à pression de 30 bar et à température ambiante de 293 K (20° C) il est nécessaire de réaliser une combustion qui va porter la température à 6 fois sa valeur initiale soit 1758 K soit 1485°C.

Dans le cas où la charge de 5 CC provient directement du compresseur elle se trouve sensiblement à une température de 693°K (420° C) et, pour un même résultat, la température de la charge devra être portée à 2158°K soit 1885°C.

L'utilisation de températures élevées dans la chambre de combustion externe entraîne de nombreuses contraintes en matière de matériaux et de refroidissements et d'émission polluante notamment de NOx (oxydes d'azote) qui se forment au-delà de 1000° C.

Le groupe moto-compresseur basses températures à combustion « froide » continue, à pression constante et à chambre active selon l'invention, propose de résoudre ces contraintes en autorisant pour des performances à caractéristiques équivalentes des combustions bien plus froides qui, paradoxalement, apportent en outre un accroissement considérable du rendement de la machine.

Le groupe moto-compresseur à basse température et chambre active est caractérisé par les moyens mis en oeuvre pris aussi bien dans leur ensemble que séparément et plus particulièrement :
- en ce qu'il comporte une chambre froide permettant d'abaisser à de très basses températures l'air atmosphérique qui alimente l'admission d'un dispositif de compression d'air, qui refoule ensuite cet air comprimé de travail, encore à basse température, dans une capacité de travail ou chambre de combustion externe équipée d'un dispositif de réchauffage de l'air, où il augmente considérablement de volume pour être ensuite admis préférentiellement dans une chambre active selon WO 2005/049968 elle-même caractérisée :
- en ce que, durant l'arrêt du piston moteur à son point mort haut, l'air ou le gaz sous pression est admis dans la chambre d'expansion lorsque celle-ci est à son plus petit volume et, sous la poussée, va augmenter son volume en produisant un travail ;
- en ce que l'air comprimé contenu dans la chambre d'expansion, se détend ensuite dans le cylindre moteur repoussant ainsi le piston moteur dans sa course descendante et fournissant un travail à son tour ;
- en ce que durant la course ascendante du piston moteur pendant le temps échappement le volume variable de la chambre d'expansion est ramené à son plus petit volume pour recommencer un cycle de travail complet.

Le cycle thermodynamique selon l'invention est donc caractérisé en ce qu'il comporte 7 phases :
- Abaissement important de la température de l'air atmosphérique
- Aspiration
- Compression
- Augmentation de la température (combustion à volume constant)
- Transfert quasisotherme
- Détente polytropique
- Echappement à pression quasi ambiante

Le groupe moto-compresseur basse température utilisant le cycle thermodynamique selon l'invention est également caractérisé en ce que l'air d'admission du compresseur est très fortement refroidi dans la chambre froide d'une machine frigorifique (ou cryogénique) utilisant des liquides qui absorbent de la chaleur pour se vaporiser, où un fluide frigorifique ou cryogénique initialement à l'état gazeux est comprimé grâce à un compresseur cryogénique et refoulé dans un serpentin où il se liquéfie, ce phénomène de liquéfaction dégage de la chaleur, et le liquide est ensuite introduit dans un évaporateur positionné dans la chambre froide où il se vaporise (phénomène qui absorbe de la chaleur). La vapeur ainsi produite retourne au compresseur et le cycle peut recommencer. L'air de travail contenu dans la chambre froide est alors considérablement refroidi et contracté, il est ensuite aspiré et comprimé par un compresseur d'air encore à basse température, dans la chambre de combustion, où il est réchauffé et augmente considérablement de volume avant son transfert quasi isotherme dans la chambre active produisant un travail avant sa détente polytropique dans le cylindre moteur produisant un travail à son tour.

Pour fixer les idées, à titre d'exemple non limitatif, si une charge d'air comprimé de 5 cm³ est introduite par le compresseur d'air directement dans une chambre de travail et de combustion à pression de 30 bar et à température de 90 K, pour permettre d'alimenter sous 30 bar une chambre active de 30 cm³ il est nécessaire de réaliser une combustion qui va porter la température à 6 fois sa valeur initiale soit 540 K ou 267 ° C.

Selon une variante de l'invention, l'air de travail comprimé en sortie du compresseur, encore à basse température, traverse un échangeur air air avant d'être dirigé vers la chambre de combustion et de ce fait, retourne quasiment à la température ambiante en augmentant considérablement de volume avant son introduction dans la chambre de combustion. Les besoins d'apport énergétique thermique nécessaires sont ainsi considérablement diminués.

Pour fixer les idées, à titre d'exemple comparatif si une charge d'air comprimé de 5 cm³ provenant du compresseur d'air à 90 K traverse un échangeur air air et voit sa température ramenée à quasi l'ambiante soit 270 K le volume introduit dans la chambre de travail et de réchauffe est alors de 15 cm³ et toujours pour alimente la chambre active à 30 bar, il est alors nécessaire de réaliser une combustion qui va porter la température à seulement 2 fois sa valeur (soit 540° K) réalisant ainsi une considérable économie d'énergie apportée par le carburant.

Selon une variante de l'invention, l'air de travail comprimé, encore à basse température, en sortie du compresseur d'air est dirigé dans un réservoir de stockage haute pression de grand volume où, selon son volume relatif et le temps de stockage, il retourne quasiment à la température ambiante, pour être ensuite détendu préférentiellement à travers un détendeur dynamique selon WO 03/089764, à une pression moyenne de travail dans la chambre de combustion où il est alors réchauffé, et augmente considérablement de volume, avant son transfert quasi isotherme dans la chambre active produisant un travail, avant sa détente polytropique dans le cylindre moteur produisant un travail à son tour.

Selon le volume du réservoir de stockage et le temps de stockage dans ledit réservoir, le retour à la température ambiante peut être obtenu naturellement par mélange avec l'air déjà contenu dans le réservoir, toutefois, selon une variante de l'invention, il est possible d'intercaler entre le compresseur et le réservoir un échangeur air air pour activer le retour à la température ambiante, sans pour autant changer le principe de l'invention décrite.

Le cycle thermodynamique selon cette variante de l'invention est donc caractérisé en ce qu'il comporte 9 phases :
- Abaissement très important de la température de l'air atmosphérique
- Aspiration
- Compression
- Retour à l'ambiante à pression constante
- Détente isotherme
- Augmentation de la température (combustion à volume constant)
- Transfert quasisotherme
- Détente polytropique
- Echappement à pression ambiante

Le groupe moto-compresseur basses températures à chambre active selon l'invention fonctionne également en bi-mode c'est-à-dire que le compresseur d'air alimente soit le réservoir de stockage haute pression soit la chambre de combustion par dérivation sur le conduit de sortie du compresseur d'air ou les deux en combinaison, pour permettre le remplissage du réservoir de stockage haute pression pendant le fonctionnement du groupe. Dans ce dernier cas, on utilise avantageusement un surprésseur disposé, après la dérivation, sur le conduit menant au réservoir de stockage haute pression pour permettre de remplir le réservoir sous haute pression et d'alimenter par ailleurs ia chambre de combustion sous moyenne pression.

Dans ce dernier cas le pilotage du groupe s'effectue avantageusement en contrôlant la pression dans la chambre de combustion par un détendeur dynamique positionné avant ladite chambre de combustion.

Selon une autre variante de l'invention, il est possible d'utiliser avantageusement, pour le réchauffeur de la chambre de travail, des procédés thermochimiques basés sur des procédés d'absorption et de désorption, tels que ceux utilisés et décrits par exemple dans les brevets EP 0 307297 A1 et EP 0 382586 B1, ces procédés utilisant la transformation par évaporation d'un fluide, par exemple d'ammoniac liquide, en gaz réagissant avec des sels comme des chlorures de calcium, de manganèse ou autres. Le système fonctionne comme une pile thermique où, dans une première phase, l'évaporation de la réserve d'ammoniac contenu dans un évaporateur produit d'une part du froid et de l'autre une réaction chimique dans le réacteur contenant des sels qui dégagent de la chaleur. Lorsque la réserve d'ammoniac est épuisée, le système est rechargeable dans une deuxième phase par apport de chaleur dans le réacteur qui renverse la réaction où le gaz ammoniac se dissocie du chlorure, et retourne à l'état liquide par condensation.

Le réchauffeur thermochimique ainsi décrit utilise la chaleur produite durant la phase 1 pour augmenter la pression et/ou le volume de l'air comprimé provenant du réservoir de stockage haute pression, avant son introduction dans la chambre d'expansion du cylindre moteur.

Lors de la phase 2 le système est régénéré par l'apport de chaleur dégagé par les échappements du moteur ou autre source chaude.

Selon une variante de cette invention, le groupe motocompresseur-motoalternateur est équipé d'un réchauffeur thermique à brûleur, ou autre, et d'un réchauffeur thermochimique de type précédemment cité pouvant être utilisé conjointement ou successivement lors de la phase 1 du réchauffeur thermochimique où le réchauffeur thermique à brûleur va permettre de régénérer (phase 2) le réchauffeur thermochimique lorsque ce dernier est vide en réchauffant son réacteur durant la poursuite du fonctionnement du groupe avec l'utilisation du réchauffeur à brûleur.

Selon une variante de la présente invention, le moto-compresseur basses températures à chambre active utilise avantageusement une chambre de combustion externe externe c'est-à-dire dans laquelle l'air comprimé de travail n'est pas en contact avec la flamme, le réchauffage de l'air comprimé s'effectuant à travers un échangeur air air. L'air d'échappement du moteur est dans ce cas recyclé dans la chambre froide de la machine frigorifique ou cryogénique pour recommencer un nouveau cycle et le groupe moto-compresseur basses températures fonctionne en cycle fermé. Dans cette configuration, l'admission de l'air atmosphérique dans la chambre froide est supprimée. Cette solution permet de réintroduire dans la chambre froide un air détendu sensiblement à la pression atmosphérique, voire même en légère surpression et pouvant être à une température inférieure à l'ambiante. Pour fixer les idées et à titre d'exemple non limitatif, une charge de 30 cm³ introduite dans la chambre active à une température de 540 K (267° C) et détendue dans un cylindre moteur de 300 cm³ se trouve en début d'échappement à une température de l'ordre de 200 K (- 73°C) facilitant d'autant plus son refroidissement dans la chambre froide de la machine frigorifique ou cryogénique.

L'air de travail peut dans ce cas être avantageusement remplacé par un gaz exempt d'humidité tel que de l'azote permettant de ne pas former de givre sur l'échangeur de l'évaporateur de la chambre froide, qui garde ainsi toute son efficacité.

Pour le cas où la température d'échappement du moteur est supérieure à la température ambiante, un échangeur air air permettant de ramener la température de l'air d'échappement moteur à la quasi ambiante est disposé sur le conduit avant la chambre froide.

Le groupe moto-compresseur basses températures à chambre active fonctionne en mono énergie air sans apport d'énergie externe en utilisant l'air contenu dans le réservoir de stockage, détendu, préférentiellement, à travers un détendeur dynamique selon WO 03/089764 à une pression moyenne dans la chambre de combustion, avant son transfert quasi isotherme dans la chambre active produisant un travail avant sa détente polytropique dans le cylindre moteur produisant un travail à son tour.

Dans ce cas, le compresseur est alors positionné en marche à vide en maintenant les conduits d'admission et d'échappement dudit compresseur fermés et le compresseur de la machine frigorifique n'est plus entraîné alors que le dispositif de réchauffage de la chambre de combustion n'est pas activé.

Selon une variante de fonctionnement le groupe moto-compresseur selon l'invention fonctionne en bi énergie en utilisant l'air comprimé contenu dans le réservoir de stockage détendu, préférentiellement, à travers un détendeur dynamique selon WO 03/089764 à une pression moyenne dans la chambre de combustion où il est alors réchauffé et augmente considérablement de volume avant son transfert quasi isotherme dans la chambre active produisant un travail avant sa détente polytropique dans le cylindre moteur produisant un travail à son tour.

Dans ce cas le compresseur est alors positionné en marche à vide en maintenant les conduits d'admission et d'échappement dudit compresseur fermés et le compresseur de la machine frigorifique n'est plus entraîné alors que le dispositif de réchauffage de la chambre de combustion est activé.

Selon une variante de l'invention, le groupe moto-compresseur fonctionne en bi-énergie c'est-à-dire en mono énergie air dans certaines conditions d'utilisation, par exemple pour un véhicule en circulation urbaine et/ou en mono énergie carburant dans d'autres conditions d'utilisation par exemple pour ce même véhicule sur route.

Le conduit d'échappement du compresseur alimente, successivement ou simultanément la chambre de combustion et/ou le réservoir de stockage haute pression par une dérivation, controlée en débit, sur son conduit d'échappement. Pour permettre le stockage à haute pression et la combustion simultanée à moyenne pression de travail un surpresseur d'air est alors positionné sur le conduit entre la dérivation et le réservoir de stockage.

Le mode de compression de la machine frigorifique, les évaporateurs et les échangeurs, les matériaux utilisés, les fluides frigorifiques ou cryogéniques utilisés pour mettre en oeuvre l'invention peuvent varier sans changer pour autant l'invention décrite. Parmi les fluides frigorifiques et cryogéniques l'azote, l'hydrogène, l'hélium peuvent être utilisés pour obtenir les résultats recherchés.

Toutes dispositions mécaniques, hydrauliques, électriques ou autres permettant l'accomplissement du cycle de refroidissement, de compression, de travail de la chambre active à savoir introduction de la charge admise par augmentation de volume produisant un travail suivi du maintien à un volume déterminé qui est le volume réel de chambre durant la course de détente du piston moteur puis du retour à son volume minimum pour permettre un nouveau cycle, peuvent être utilisées sans pour autant changer l'invention qui vient d'être décrite.

Préférentiellement la chambre d'expansion à volume variable dite chambre active est constituée d'un piston dit piston de charge coulissant dans un cylindre et relié par une bielle au vilebrequin du moteur. Toutefois d'autres dispositions mécaniques, électriques ou hydrauliques, permettant d'effectuer les mêmes fonctions et le cycle thermodynamique de l'invention peuvent être utilisées sans pour autant changer le principe de l'invention.

Préférentiellement, l'ensemble du dispositif (piston et levier à pression) est équilibré en prolongeant le bras inférieur au-delà de son extrémité immobile, ou pivot, par un levier à pression miroir opposé en direction, symétrique et d'inertie identique auquel est fixée, pouvant se déplacer sur un axe parallèle à l'axe de déplacement du piston, une masse d'inertie identique et opposée en direction à celle du piston. On appelle inertie le produit de la masse par la distance de son centre de gravité au point de référence. Dans le cas d'un moteur pluri cylindres la masse opposée peut être un piston fonctionnant normalement comme le piston qu'il équilibre.

Préférentiellement le dispositif selon la présente invention utilise cette dernière disposition dans laquelle l'axe des cylindres opposés, et le point fixe du levier à pression sont sensiblement alignés sur un même axe et où l'axe de la bielle de commande reliée au vilebrequin est positionné d'autre part non pas sur l'axe commun des bras articulés mais sur le bras lui-même entre l'axe commun et le point fixe ou pivot. De ce fait le bras inférieur et sa symétrie représentent un bras unique avec le pivot, ou point fixe, sensiblement en son centre et deux axes à chacune de ses extrémités libres reliées aux pistons opposés.

Le nombre de cylindres peut varier sans pour autant changer le principe de l'invention alors que de préférence l'on utilise des ensembles en nombres pairs de deux cylindres opposés, ou bien pour obtenir une plus grande régularité cyclique, de plus de deux cylindres par exemple quatre ou six.

Lors du fonctionnement en mode mono énergie air comprimé, par exemple pour un véhicule en site urbain, seule la pression de l'air comprimé dans le réservoir haute pression est utilisée pour le fonctionnement ; en fonctionnement en mode carburant fossile (ou autre), pour un véhicule sur route par exemple, le réchauffage de la capacité est alors commandé permettant d'augmenter la température de l'air qui le traverse et par voie de conséquence le volume et/ou la pression utilisable pour le travail de charge de la chambre et de la détente.

Le moteur selon l'invention est avantageusement piloté par le contrôle de la pression dans la chambre de combustion, et un calculateur électronique contrôle la quantité d'énergie fossile apportée en fonctionnement en mode énergie additionnelle, en fonction de la pression dans ladite capacité de travail.

Selon une variante de l'invention le compresseur d'air de travail peut être constitué de plusieurs étages. Dans ce cas, l'air sera refroidi entre chaque étage en retraversant la machine frigorifique ou cryogénique, la cylindrée de l étage suivant étant inférieure à celle de l'étage précédent.

Selon une autre variante de l'invention le moteur est constitué de plusieurs étages de détente chaque étage, comportant une chambre active selon l'invention où entre chaque étage est positionné un échangeur permettant de réchauffer l'air de l'échappement de l'étage précédent et/ou éventuellement un dispositif de réchauffage à énergie additionnelle. Les cylindrées de l'étage suivant étant plus importantes que celles de l'étage précédant.

Dans le cas d'un groupe mono énergie air comprimé la détente dans le premier cylindre ayant produit un abaissement de température, le réchauffement de l'air se fera avantageusement dans un échangeur avec la température ambiante.

Dans le cas d'un moteur bi-énergie en mode énergie additionnelle il est procédé au réchauffement de l'air par une énergie additionnelle dans un réchauffeur thermique par exemple fossile.

Selon une variante de cette disposition après chaque étage l'air de l'échappement est dirigé vers un seul réchauffeur à plusieurs étages.

Les échangeurs thermiques peuvent être des échangeurs air air, ou air liquide, ou tout autre dispositif ou gaz produisant l'effet recherché.

Le groupe moto-compresseur basses températures à combustion «froide » continue à pression constante utilise avantageusement une chambre active selon WO 2005/049968. Toutefois selon de nombreuses variantes de l'invention, il peut être utilisé des dispositifs de détente de moteurs conventionnels tels que bielle manivelle classique, pistons rotatifs ou autres et il en va de même pour les dispositifs de compression, pour lesquels le nombre d'étages de compression, leur conception : pistons alternatifs, pistons rotatifs, turbine, peuvent varier sans pour autant changer le principe de l'invention qui vient d'être décrite.

Le groupe moto-compresseur basse température à chambre active selon l'invention peut être utilisé sur tous vehicules terrestres, maritimes, ferroviaires, aéronautiques.

Le groupe moto-compresseur basse température à chambre active selon l'invention peut également et avantageusement trouver son application dans les groupes électrogènes de secours, de dépannages et de production d'électricité, de même que dans de nombreuses applications domestiques de cogénération produisant de l'électricité, du chauffage et de la climatisation.

D'autres buts, avantages et caractéristiques de l'invention apparaîtront à la lecture de la description, à titre non limitatif, de plusieurs modes de réalisation, faite en regard des dessins annexés où :
- La figure 1 représente schématiquement vu en coupe transversale un groupe moto-compresseur à combustion froide et à chambre active selon l'invention.
- Les figures 2 à 4 représentent sur des vues schématiques en coupe transversale les différentes phases de fonctionnement du groupe moto-compresseur selon l'invention.
- La figure 5 représente schématiquement un groupe moto-compresseur selon l'invention en configuration mono énergie carburant.
- La figure 6 représente schématiquement un groupe moto-compresseur selon l'invention en configuration bi-énergie bi mode.
- La figure 7 représente schématiquement un groupe moto-compresseur selon l'invention dans sa configuration en cycle fermé et chambre de combustion externe externe.

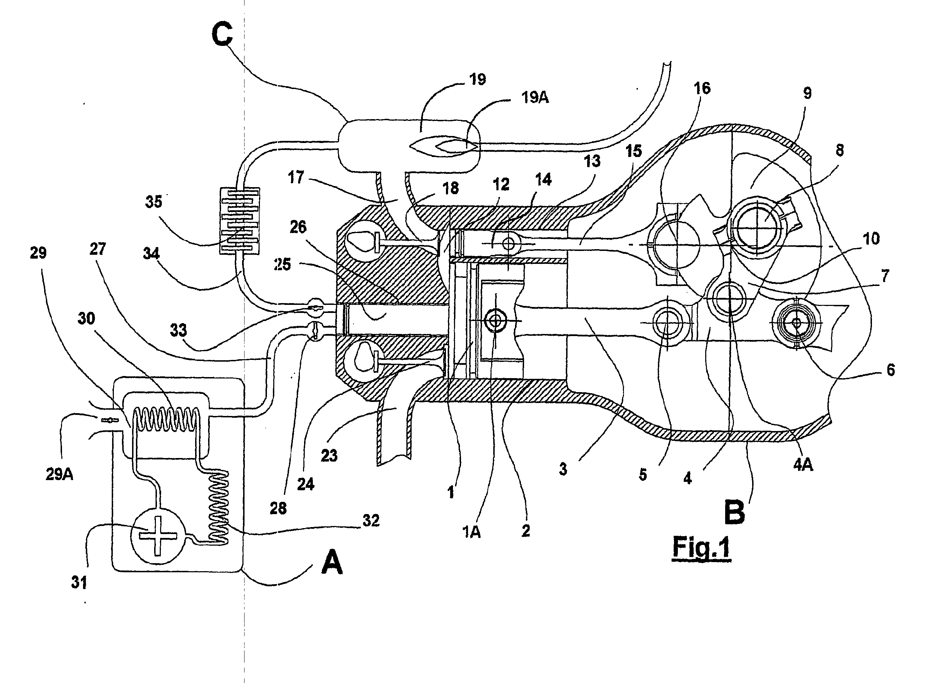

La figure 1 représente schématiquement vu en coupe transversale, un groupe moto-compresseur basse température à chambre active selon l'invention comportant ses trois éléments principaux : une machine frigorifique ou cryogénique A, un moto-compresseur B et le dispositif de combustion externe C où l'on peut voir le piston moteur 1 (représenté à son point mort haut), coulissant dans un cylindre 2, et commandé par un levier à pression. Le piston moteur 1 est relié par son axe à l'extrémité libre 1A d'un levier à pression constitué d'un bras 3 articulé sur un axe commun 5 à un autre bras 4 fixé oscillant sur un axe immobile 6, et sur lequel est ménagé sensiblement en son milieu un axe 4A auquel est attachée une bielle 7 de commande reliée au maneton 8 d'un vilebrequin 9 tournant sur son axe 10. Lors de la rotation du vilebrequin la bielle de commande 7 à travers le bras inférieur 4 et son axe 4A, exerce un effort sur l'axe commun 5 des deux bras 3 et 4 du levier à pression, permettant ainsi le déplacement du piston 1 suivant l'axe du cylindre 2, et transmet en retour au vilebrequin 9 les efforts exercés sur le piston 1 lors du temps moteur provoquant ainsi sa rotation. Le cylindre moteur est en communication par un passage 12 dans sa partie haute avec le cylindre de chambre active 13 dans lequel coulisse un piston 14 dit piston de charge relié par une bielle 15 à un maneton 16 du vilebrequin 9. Un conduit d'admission 17 commandé par une soupape 18 débouche dans le passage 12 reliant le cylindre moteur 2 et le cylindre de chambre active 13 et permet d'alimenter le moteur en air comprimé provenant de la chambre de travail 19 qui comporte un dispositif de combustion continue ou sensiblement continue représenté par un brûleur 19A qui peut être alimenté par un carburant fossile, ou biologique, ou encore un alcool, ou un gaz, maintenu à pression sensiblement constante. Dans la partie supérieure du cylindre moteur 2 est ménagé un conduit d'échappement 23 commandé par une soupape d'échappement 24.

Le piston moteur 1 comporte, solidaire de sa calotte, un deuxième étage 25, piston de compression qui coulisse solidaire du piston moteur 1 dans un cylindre de compression 26 alimenté en air atmosphérique à très basses températures par un conduit 27 à travers un clapet 28, provenant d'une chambre froide 29 dans laquelle est installé l'évaporateur 30 d'une machine frigorifique ou cryogénique A comportant également un compresseur 31 de fluide cryogénique entraîné par le vilebrequin 10 (entraînement non représenté sur le dessin) et un échangeur de liquéfaction 32. Le cylindre de compression 26 comporte également en sa partie supérieure un clapet d'échappement 33 qui permet par un conduit d'échappement 34 d'alimenter la chambre de combustion 19 après avoir traversé un échangeur 35 avec l'ambiante.

Un papillon d'accélérateur 29A est positionné à l'entrée de la chambre froide 29 pour permettre le pilotage du groupe.

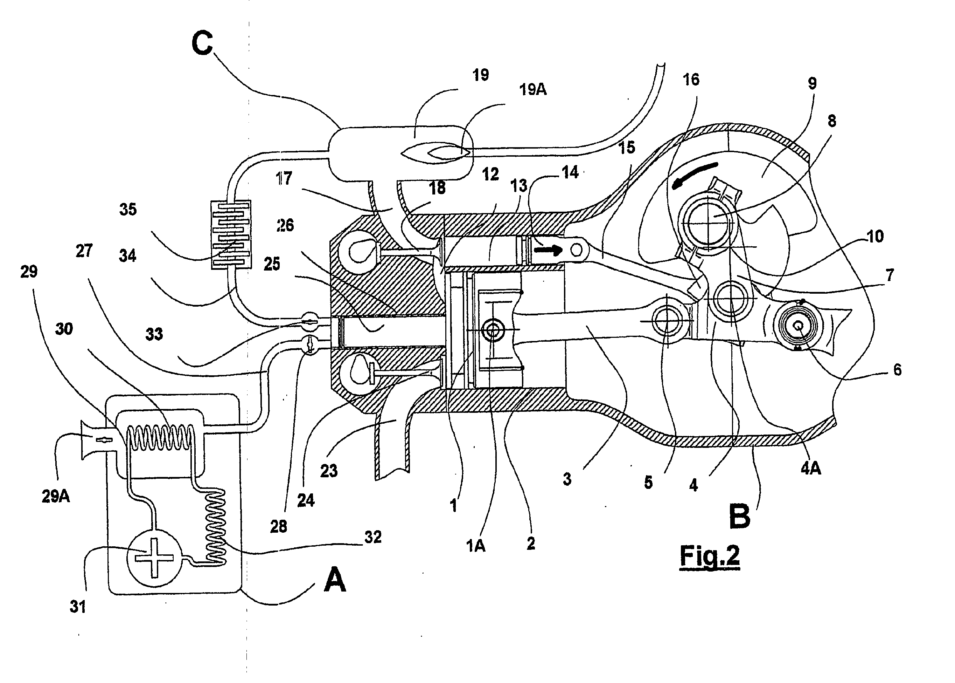

La figure 2 représente schématiquement, vu en coupe transversale, le moteur à chambre active selon l'invention en cours d'admission, le piston moteur 1 est arrêté à sa position point mort haut et la soupape d'admission 18 vient d'être ouverte, la pression de l'air contenue dans la capacité de travail 19 repousse le piston de charge 14 tout en remplissant le cylindre de la chambre active 13 et produisant un travail en provoquant par sa bielle 15 la rotation du vilebrequin 9, le travail étant considérable car effectué à pression quasi constante.

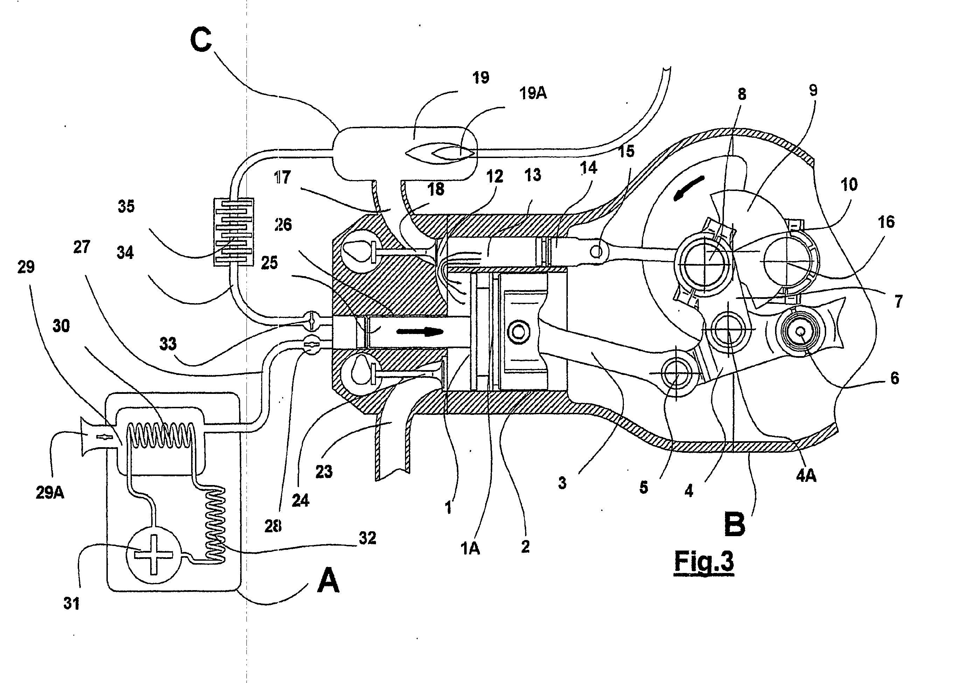

En poursuivant sa rotation le vilebrequin autorise -figure 3 - le déplacement du piston moteur 1 vers son point mort bas et sensiblement simultanément la soupape d'admission 18 est alors refermée; la charge contenue dans la chambre active se détend en repoussant le piston moteur 1 qui produit à son tour un travail en provoquant la rotation du vilebrequin 9 au travers de son équipage mobile constitué par les bras 3 et 4 et la bielle de commande 7.

Le piston moteur 1 entraîne dans sa course descendante le piston de compression 25 qui aspire l'air atmosphérique fortement refroidi dans la chambre froide 29 dans laquelle est installé l'évaporateur 30 à très basse température de la machine cryogénique alors que le fluide cryogénique gazeux est préalablement comprimé par le compresseur 31 dans l'échangeur 32 (source chaude) où il se liquéfie avant d'être refoulé dans l'évaporateur 30 (source froide) où règne une pression plus faible où il se vaporise (absorbant de la chaleur) avant de retourner à l'état gazeux vers le compresseur 31 et recommencer un cycle.

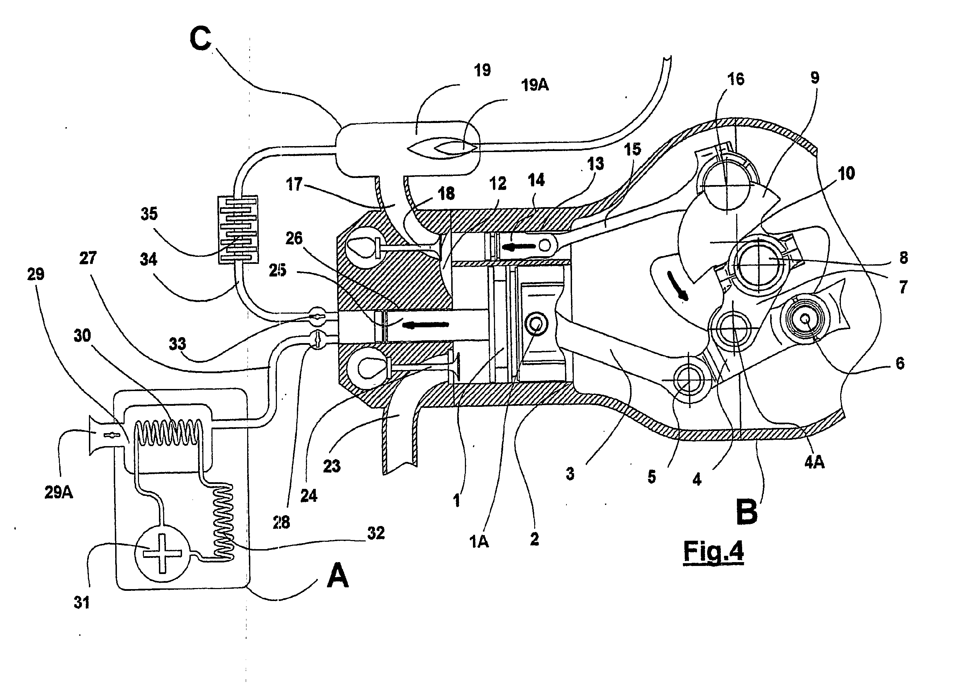

Durant ce cycle du piston moteur 1 le piston de charge 14 poursuit sa course vers le point mort bas et commence sa remontée vers son point mort haut, l'ensemble des éléments étant calés de telle sorte que durant la course ascendante des pistons - voir figure 4 - le piston de charge 14 et le piston moteur 1 arrivent sensiblement ensemble à leur point mort haut où le piston moteur 1 va s'arrêter, et le piston de charge 14 entamer une nouvelle course descendante pour recommencer le cycle. Lors de la course ascendante des deux pistons 1,14, la soupape d'échappement 24 est ouverte afin d'évacuer l'air détendu à travers le conduit d'échappement 23 alors que le piston de compression 25 refoule de l'air comprimé encore à basse température, à travers un échangeur 35, où cet air comprimé retourne à une température proche de l'ambiante en augmentant de volume pour être admis dans la chambre de combustion 19.

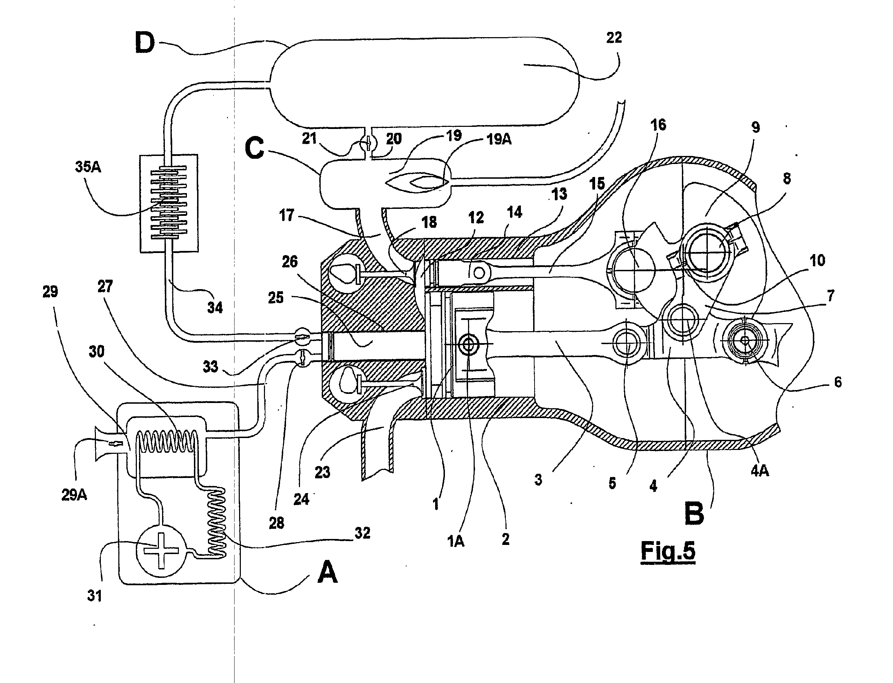

La figure 5 représente, vu schématiquement en coupe transversale, un groupe moto-compresseur selon l'invention où l'air comprimé, encore à basse température, en sortie du compresseur d'air est dirigé dans un réservoir de stockage haute pression de grand volume représente schématiquement vu en coupe transversale, un groupe moto-compresseur basse température à chambre active selon l'invention comportant ses trois éléments principaux, une machine frigorifique ou cryogénique A, un moto-compresseur B et son dispositif de combustion externe C ainsi qu'un réservoir de stockage haute pression D où l'on peut voir : le piston moteur 1 (représenté à son point mort haut), coulissant dans un cylindre 2, et commandé par un levier à pression. Le piston moteur 1 est relié par son axe à l'extrémité libre 1A d'un levier à pression constitué d'un bras 3 articulé sur un axe commun 5 à un autre bras 4 fixé oscillant, sur un axe immobile 6. Sur l'axe commun 5 aux deux bras 3 et 4 est attachée une bielle 7 de commande reliée au maneton 8 d'un vilebrequin 9 tournant sur son axe 10. Lors de la rotation du vilebrequin la bielle de commande 7 exerce un effort sur l'axe commun 5 des deux bras 3 et 4 du levier à pression, permettant ainsi le déplacement du piston 1 suivant l'axe du cylindre 2, et transmet en retour au vilebrequin 9 les efforts exercés sur le piston 1 lors du temps moteur provoquant ainsi sa rotation. Le cylindre moteur est en communication par un passage 12 dans sa partie haute avec le cylindre de chambre active 13 dans lequel coulisse un piston 14 dit piston de charge relié par une bielle 15 à un maneton 16 du vilebrequin 9. Un conduit d'admission 17 commandé par une soupape 18 débouche dans le passage 12 reliant le cylindre moteur 2 et le cylindre de chambre active 13 et permet d'alimenter le moteur en air comprimé provenant de la chambre de travail 19, qui comporte un dispositif de combustion continue, ou sensiblement continue, représenté par un brûleur 19A qui peut être alimenté par un carburant, fossile ou biologique, ou encore une huile végétale, un alcool ou un gaz, maintenu à pression sensiblement constante et, elle-même alimentée en air comprimé, à travers un conduit 20 commandé par un détendeur dynamique 21, par le réservoir de stockage haute pression 22. Dans la partie supérieure du cylindre moteur 2 est ménagé un conduit d'échappement 23 commandé par un soupape d'échappement 24.

Le piston moteur 1 comporte solidaire de sa calotte un deuxième étage 25, piston de compression, qui coulisse solidaire du piston moteur 1 dans un cylindre de compression 26 alimenté en air à pression atmosphérique, à très basses températures par un conduit 27 à travers un clapet 28, provenant d'une chambre froide 29 dans laquelle est installé l'évaporateur 30 d'une machine frigorifique ou cryogénique A comportant un compresseur 31 de fluide cryogénique entraîné par le vilebrequin 10 (entraînement non représenté sur le dessin) et un échangeur de liquéfaction 32. Le cylindre de compression 26 comporte également en sa partie supérieure un clapet d'échappement 33 qui permet par un conduit d'échappement 34 d'alimenter la chambre de combustion 19 après avoir traversé un échangeur 35A avec l'ambiante.

Un dispositif commandé par un dispositif d'accélération en combinaison avec le papillon 29A, actionne le détendeur dynamique 21 pour permettre de réguler la pression dans la chambre de travail et piloter ainsi le moteur.

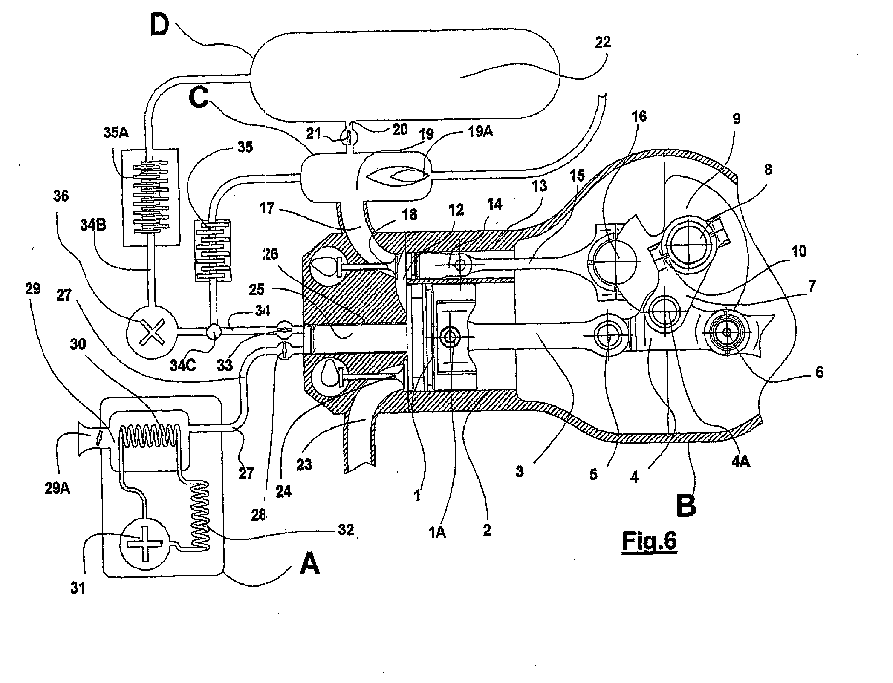

La figure 6 représente vu schématiquement en coupe transversale un groupe moto-compresseur selon l'invention en version bi-énergie et bi mode où le compresseur d'air du groupe alimente soit le réservoir de stockage haute pression 22 soit la chambre de combustion 19, ou les deux en combinaison. Le conduit d'échappement du compresseur 34 comporte une dérivation 34A, vers la chambre de combustion 19 traversant un échangeur air air 35 et le conduit 34B vers le réservoir de stockage haute pression 22 traverse un échangeur 35A pour ramener la température de l'air comprimé proche de l'ambiante avant son introduction dans le réservoir de stockage HP. Un surpresseur d'air 36 est alors positionné sur le conduit 34B entre la dérivation 34A et le réservoir pour permettre de stocker l'air comprimé dans le réservoir 22 à une pression supérieure à celle de travail dans la chambre de combustion 19. Selon les caractéristiques et dimensionnements du surpresseur, conditionnant les températures de l'air comprimé, le surpresseur 36 est positionné avant ou après l'échangeur 35A. Cette configuration selon l'invention permet de remplir le réservoir 22 durant le fonctionnement du groupe.

Une vanne 34C pilotée permet de répartir en fonction des besoins le flux d'air comprimé dans la chambre de combustion et dans le réservoir.

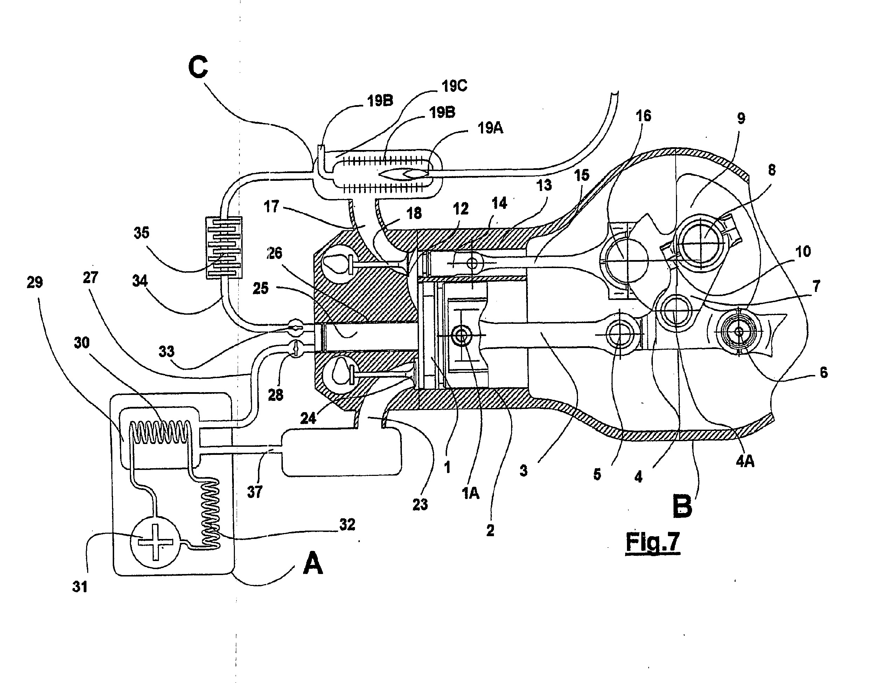

La figure 7 représente vu schématiquement en coup transversale un groupe motocompresseur basses températures à combustion « froide » continue à pression constante et à chambre active à cycle fermé fonctionnant avec une chambre de combustion externe-externe où l'on peut voir en A et B les éléments identiques aux précédentes descriptions à l'exception de l'échappement 23 qui est recirculé par un conduit 37 dans la chambre froide 29. La chambre de combustion externe externe est constitué d'un brûleur 19A fonctionnant comme une sorte de chaudière ou de foyer qui à travers un échangeur air air 19B réchauffe une chambre d'expansion 19C, dans laquelle l'air comprimé à la pression de travail provenant à température quasi ambiante par le conduit 34 et à travers l'échangeur 35, va augmenter de température à pression constante, et de volume, et repousser le piston de charge 14 tout en remplissant le cylindre de la chambre active 13 en produisant un travail et en provoquant par sa bielle 15 la rotation du vilebrequin 9, pour ensuite être détendu selon une polytropique dans le cylindre moteur 2 où il va repousser le piston moteur 1 qui produit un travail à son tour en provoquant la rotation du vilebrequin 9 au travers de son équipage mobile. Un conduit d'évacuation 19D de l'air chaud généré par le brûleur évacue à l'atmosphère les gaz brûlés dans le foyer. Un papillon 21A, positionné sur le conduit d'admission 17 et une gestion de la température de la chaudière permet le pilotage du groupe.

Il est à noter que dans cette configuration l'air d'échappement du moteur peut être à une température inférieure à 0° et sera plus aisément refroidi dans la chambre froide.

L'invention n'est pas limitée aux exemples de réalisations décrits et représentés : les matériaux, les moyens de commande, les dispositifs décrits peuvent varier dans la limite des équivalents, pour produire les mêmes résultats, sans pour cela changer l'invention qui vient d'être décrite.

Le descriptif et les revendications de la présente invention indiquent des valeurs de températures d'air sous des dénominations - très basses températures, basses températures, ambiante ou température ambiante et combustion « froide ». Les températures de fonctionnement sont en fait relatives entre elles, toutefois, et pour clarifier les idées et ce, à titre non limitatif, le rédacteur utilise les termes très basses températures pour des valeurs inférieures à 90 K - Basses températures pour des valeurs inférieures à 200 K - l'ambiante entre 273 et 293 K - quant à combustion « froide », il s'agit d'une comparaison avec les combustions de moteur actuels supérieures à 2000 K et pourraient être entre 400 et 1000 K.

## Revendications

1. Groupe moto-compresseur basses températures à combustion « froide » continue à pression constante et chambre active fonctionnant notamment avec de l'air comprimé de travail et utilisant un dispositif de contrôle de la course du piston ayant pour effet l'arrêt du piston à son point mort haut durant une période de temps, ainsi qu'une chambre active, constituée d'un volume variable équipé de moyens permettant de produire un travail lors de son remplissage, jumelée et en contact permanent par un passage, avec l'espace compris au dessus du piston moteur principal, ainsi qu'un dispositif de compression intégré ou non **caractérisé :**
- **en ce qu'**il comporte une chambre froide (29) permettant d'abaisser à de très basses températures, l'air atmosphérique qui alimente l'admission d'un dispositif de compression d'air, qui refoule ensuite cet air comprimé de travail encore à basses températures dans une capacité de travail ou chambre de combustion (19) externe équipée d'un dispositif de réchauffage (19A) à pression constante où il (l'air comprimé de travail) va augmenter de volume avant son transfert quasi isotherme, dans un dispositif de détente produisant un travail, comportant préférentiellement une chambre active elle-même **caractérisée :**
- **en ce que**, durant l'arrêt du piston moteur (1) à son point mort haut, l'air ou le gaz sous pression est admis dans la chambre d'expansion (12) lorsque celle-ci est à son plus petit volume et sous la poussée va augmenter son volume en produisant un travail,
- **en ce que** l'air comprimé contenu dans la chambre d'expansion, se détend ensuite dans le cylindre moteur (2) repoussant ainsi le piston moteur (1) dans sa course descendante et fournissant un travail à son tour,
- **en ce que** durant la course ascendante du piston moteur (1) pendant le temps échappement le volume variable de la chambre d'expansion est ramené à son plus petit volume pour recommencer un cycle de travail complet.

2. Groupe moto-compresseur basses températures à combustion « froide » continue à pression constante et chambre active selon la revendication 1 **caractérisé en ce que** l'air comprimé retourne à la température ambiante à travers un échangeur (35) préférentiellement air air, avant d'être introduit dans la chambre de combustion externe (19).

3. Groupe moto-compresseur basses températures à combustion « froide » continue à pression constante et chambre active selon les revendications 1 et 2 **caractérisé par** son cycle thermodynamique comportant :
- Un abaissement de la température de l'air atmosphérique
- Aspiration
- Compression
- Augmentation de la température
- Transfert sous pression constante quasi isotherme
- Détente polytropique
- Echappement à pression ambiante.

4. Groupe moto-compresseur basses températures à combustion « froide » continue à pression constante et chambre active selon les revendications 1 à 3 **caractérisé en ce que** l'air de travail est très fortement refroidi dans la chambre froide d'une machine frigorifique ou cryogénique (A) utilisant des liquides qui absorbent de la chaleur pour se vaporiser, où, un fluide frigorifique ou cryogénique initialement à l'état gazeux est comprimé grâce à un compresseur cryogénique (31) et refoulé dans un serpentin (32) où il se liquéfie, ce phénomène de liquéfaction dégage de la chaleur, et le liquide est ensuite introduit dans un évaporateur (30) positionné dans la chambre froide (29) où il se vaporise (phénomène qui absorbe de la chaleur). La vapeur ainsi produite retourne au compresseur et le cycle peut recommencer, maintenant la chambre froide à de très basses températures.

5. Groupe moto-compresseur basses températures à combustion « froide » continue à pression constante et chambre active selon les revendications 1, 3 et 4 **caractérisé en ce que** l'air comprimé par le compresseur d'air (28,25,26,33) encore à basse température est dirigé dans un réservoir de stockage (22) haute pression de grand volume où, selon son volume relatif et le temps de stockage, il retourne quasiment à la température ambiante pour être ensuite détendu préférentiellement à travers un détendeur dynamique (21) à une pression moyenne de travail dans la chambre de combustion (19) où il est réchauffé et où il augmente considérablement de volume avant son transfert quasi isotherme dans la chambre active produisant un travail avant sa détente polytropique dans le cylindre moteur (2) produisant un travail à son tour.

6. Groupe moto-compresseur basses températures à combustion « froide » continue à pression constante et chambre active selon la revendication 5 **caractérisé en ce que** l'air comprimé par le compresseur d'air traverse un échangeur air air (35A) pour remonter sa température et augmenter son volume avant son introduction dans le réservoir de stockage (22).

7. Groupe moto-compresseur basses températures à combustion « froide » continue à pression constante et chambre active selon les revendications 5 et 6 **caractérisé par** son cycle thermodynamique comportant :
- Un abaissement de la température de l'air d'admission
- Aspiration
- Compression
- Un retour à l'ambiante
- Un transfert quasi isotherme
- Augmentation de la température (combustion à volume constant)
- Transfert sous pression constante quasi isotherme
- Détente polytropique
- Echappement à pression ambiante

8. Groupe moto-compresseur basses températures à combustion « froide » continue à pression constante et chambre active selon l'une quelconque des revendications 5 à 7, **caractérisé en ce que** le compresseur d'air de travail (28,25,26,33) alimente le réservoir de stockage (22) et la chambre de combustion (19) soit successivement soit en combinaison permettant le remplissage du réservoir de stockage (22) pendant le fonctionnement du groupe.

9. Groupe moto-compresseur basses températures à combustion « froide » continue à pression constante et chambre active selon la revendication 8 **caractérisé en ce qu'**un surpresseur (36) est installé avant l'introduction de l'air comprimé de travail dans le réservoir de stockage (22) permettant en fonctionnement de remplir simultanemment le réservoir de stockage sous haute pression et d'alimenter la chambre de combustion (19) sous une pression moins élevée.

10. Groupe moto-compresseur basses températures à combustion « froide » continue à pression constante et chambre active selon les revendications 8 et 9 précédentes **caractérisé par** son fonctionnement en mono énergie air de travail sans apport d'énergie externe en utilisant l'air contenu dans le réservoir de stockage (22) détendu préférentiellement à travers un détendeur dynamique (21) à une pression moyenne dans la chambre de combustion (19) avant son transfert quasi isotherme dans la chambre active (12,13,14) produisant un travail avant sa détente polytropique dans le cylindre moteur (2) produisant un travail à son tour. Dans ce cas le compresseur d'air de travail est alors positionné en marche à vide en maintenant les conduits d'admission et d'échappement dudit compresseur fermés et le compresseur de la machine frigorifique n'est plus entraîné alors que le dispositif de réchauffage de la chambre de combustion n'est pas activé.

11. Groupe moto-compresseur basses températures à combustion « froide » continue à pression constante et chambre active selon l'une quelconque des revendications précédentes **caractérisé en ce que** le groupe fonctionne en biénergie plmuri modes c'est-à-dire en mono énergie air dans certaines conditions d'utilisation et/ou en bi énergie air comprimé de stockage (22) plus combustion dans la chambre de combustion (19) et/ou en mono-énergie carburant dans d'autres conditions d'utilisation.

12. Groupe moto-compresseur basses températures à combustion « froide » continue à pression constante et chambre active selon l'une quelconque des revendications ci-dessus, **caractérisé en ce que** en complément ou à la place de la chambre de combustion est positionné un réchauffeur thermique (29) qui utilise un procédé thermochimique de réaction gaz solide basé sur la transformation par évaporation d'un fluide réactif contenu dans un évaporateur, par exemple de l'ammoniac liquide en un gaz qui vient réagir avec un réactif solide contenu dans un réacteur par exemple des sels tels que des chlorures de calcium, de manganèse, de baryum ou autres dont la réaction chimique produit de la chaleur, et qui, lorsque la réaction est terminée peut être régénéré en apportant de la chaleur au réacteur pour provoquer la désorption de l'ammoniac gazeux qui va se recondenser dans l'évaporateur.

13. Groupe moto-compresseur basses températures à combustion « froide » continue à pression constante et chambre active selon l'une quelconque des revendications précédentes **caractérisé en ce que** la chambre de combustion est équipée d'un dispositif de réchauffage dit externe externe où l'air comprimé est réchauffé à travers un échangeur sans contact direct avec la flamme.

14. Groupe moto-compresseur basses températures à combustion « froide » continue et chambre active selon la revendication 13 **caractérisé en ce que** l'air de travail en sortie de l'échappement du moteur (23)est recyclé dans la chambre froide (29) de la machine frigorifique ou cryogénique A pour recommencer un nouveau cycle, et permettre le fonctionnement du groupe en cycle fermé.

15. Groupe moto-compresseur basses températures à combustion « froide » continue à pression constante et chambre active selon la revendication 10 **caractérisé en ce que** et pour le cas où la température d'échappement du moteur est supérieure à la température ambiante un échangeur air air permettant de ramener la température de l'air d'échappement à la quasi ambiante est disposé sur le conduit avant la chambre froide.

16. Groupe moto-compresseur basses températures à combustion « froide » continue à pression constante et chambre active selon l'une quelconque des revendications ci-dessus **caractérisé en ce que** le dispositif de détente à chambre active est remplacé par un système de détente conventionnel tel que piston et bielle manivelle classique, ou encore un dispositif de moteur rotatif.

## Patentansprüche

1. Niedertemperatur-Motorkompressoreinheit mit kontinuierlicher "kalter" Verbrennung bei konstantem Druck und mit aktiver Kammer, welche insbesondere mit Arbeitsdruckluft betrieben wird und eine Vorrichtung zur Steuerung des Hubs des Kolbens verwendet, die den Stillstand des Kolbens an seinem oberen Totpunkt während eines Zeitabschnitts bewirkt, sowie eine aktive Kammer, die aus einem variablen Volumen besteht, das mit Mitteln ausgestattet ist, die es ermöglichen, während seiner Füllung Arbeit zu verrichten, und die mit dem oberhalb des Hauptarbeitskolbens befindlichen Raum verbunden ist und über einen Durchlass in permanentem Kontakt mit diesem steht, sowie eine integrierte oder nicht integrierte Verdichtungsvorrichtung, **gekennzeichnet:**
- **dadurch, dass** sie eine Kältekammer (29) aufweist, die es ermöglicht, die atmosphärische Luft auf sehr tiefe Temperaturen abzukühlen, welche den Einlass einer Luftverdichtungsvorrichtung speist, welche anschließend diese Arbeitsdruckluft noch bei tiefen Temperaturen in ein äußeres Arbeitsvolumen oder einen äußeren Brennraum (19) fördert, der mit einer Vorrichtung zur Erwärmung (19A) bei konstantem Druck ausgestattet ist, wo sie (die Arbeitsdruckluft) dann ihr Volumen vergrößert, vor ihrer quasi-isothermen Übertragung, unter Verrichtung von Arbeit, in eine Entspannungsvorrichtung, die vorzugsweise eine aktive Kammer aufweist, die ihrerseits **gekennzeichnet ist:**
- **dadurch**, dass während des Stillstands des Arbeitskolbens (1) an seinem oberen Totpunkt die Luft oder das Druckgas in die Expansionskammer (12) eingelassen wird, wenn diese ihr kleinstes Volumen aufweist und unter der Schubwirkung dann ihr Volumen vergrößert und dabei Arbeit verrichtet,
- **dadurch**, dass sich die in der Expansionskammer enthaltene Druckluft anschließend in dem Arbeitszylinder (2) entspannt und somit den Arbeitskolben (1) in seinem Abwärtshub zurückschiebt und ihrerseits Arbeit liefert,
- **dadurch**, dass während des Aufwärtshubs des Arbeitskolbens (1) während des Auslasstaktes das variable Volumen der Expansionskammer wieder auf sein kleinstes Volumen verkleinert wird, um erneut einen vollständigen Arbeitszyklus zu beginnen.

2. Niedertemperatur-Motorkompressoreinheit mit kontinuierlicher "kalter" Verbrennung bei konstantem Druck und mit aktiver Kammer nach Anspruch 1, **dadurch gekennzeichnet, dass** die Druckluft über einen Wärmetauscher (35), vorzugsweise einen Luft/Luft-Wärmetauscher, zur Umgebungstemperatur zurückkehrt, bevor sie in den äußeren Brennraum (19) eingeleitet wird.

3. Niedertemperatur-Motorkompressoreinheit mit kontinuierlicher "kalter" Verbrennung bei konstantem Druck und mit aktiver Kammer nach den Ansprüchen 1 und 2, **dadurch gekennzeichnet, dass** ihr thermodynamischer Zyklus aufweist:
- eine Absenkung der Temperatur der atmosphärischen Luft,
- Ansaugung,
- Verdichtung,
- Erhöhung der Temperatur,
- quasi-isotherme Übertragung unter konstantem Druck,
- polytrope Entspannung,
- Auslassen bei Umgebungsdruck.

4. Niedertemperatur-Motorkompressoreinheit mit kontinuierlicher "kalter" Verbrennung bei konstantem Druck und mit aktiver Kammer nach den Ansprüchen 1 bis 3, **dadurch gekennzeichnet, dass** die Arbeitsluft in der Kältekammer einer Kältemaschine oder kryogenen Maschine (A) sehr stark abgekühlt wird, die Flüssigkeiten verwendet, welche Wärme absorbieren, um zu verdampfen, und in der ein Kältemittel oder kryogenes Fluid, das sich ursprünglich im gasförmigen Zustand befindet, durch einen Kältemittelverdichter (31) verdichtet und in eine Rohrschlange (32) gefördert wird, wo es sich verflüssigt, wobei dieser Vorgang der Verflüssigung Wärme freisetzt, und die Flüssigkeit anschließend in einen Verdampfer (30) eingeleitet wird, der in der Kältekammer (29) positioniert ist, wo sie verdampft (Vorgang, welcher Wärme absorbiert). Der so erzeugte Dampf strömt zum Verdichter zurück, und der Zyklus kann neu beginnen, wodurch die Kältekammer auf sehr niedrigen Temperaturen gehalten wird.

5. Niedertemperatur-Motorkompressoreinheit mit kontinuierlicher "kalter" Verbrennung bei konstantem Druck und mit aktiver Kammer nach den Ansprüchen 1, 3 und 4, **dadurch gekennzeichnet, dass** die von dem Luftverdichter (28, 25, 26, 33) verdichtete Luft noch bei niedriger Temperatur in einen Hochdruck-Speicherbehälter (22) mit großem Volumen geleitet wird, wo sie, je nach ihrem relativen Volumen und der Speicherdauer, praktisch zur Umgebungstemperatur zurückkehrt, um anschließend vorzugsweise durch eine dynamische Druckminderungsvorrichtung (21) auf einen mittleren Arbeitsdruck in dem Brennraum (19) entspannt zu werden, wo sie wieder erwärmt wird und wo sich ihr Volumen vor ihrer quasi-isothermen Übertragung in die aktive Kammer beträchtlich vergrößert, wobei sie Arbeit verrichtet, vor ihrer polytropen Entspannung im Arbeitszylinder (2), die ihrerseits Arbeit verrichtet.

6. Niedertemperatur-Motorkompressoreinheit mit kontinuierlicher "kalter" Verbrennung bei konstantem Druck und mit aktiver Kammer nach Anspruch 5, **dadurch gekennzeichnet, dass** die von dem Luftverdichter verdichtete Luft einen Luft/Luft-Wärmetauscher (35A) durchströmt, so dass sich vor ihrer Einleitung in den Speicherbehälter (22) ihre Temperatur wieder erhöht und ihr Volumen vergrößert.

7. Niedertemperatur-Motorkompressoreinheit mit kontinuierlicher "kalter" Verbrennung bei konstantem Druck und mit aktiver Kammer nach den Ansprüchen 5 und 6, **dadurch gekennzeichnet, dass** ihr thermodynamischer Zyklus aufweist:
- eine Absenkung der Temperatur der Einlassluft,
- Ansaugung,
- Verdichtung,
- eine Rückkehr zur Umgebungstemperatur,
- eine quasi-isotherme Übertragung,
- Erhöhung der Temperatur (Verbrennung bei konstantem Volumen),
- quasi-isotherme Übertragung unter konstantem Druck,
- polytrope Entspannung,
- Auslassen bei Umgebungsdruck.

8. Niedertemperatur-Motorkompressoreinheit mit kontinuierlicher "kalter" Verbrennung bei konstantem Druck und mit aktiver Kammer nach einem der Ansprüche 5 bis 7, **dadurch gekennzeichnet, dass** der Arbeitsluftverdichter (28, 25, 26, 33) den Speicherbehälter (22) und den Brennraum (19) entweder nacheinander oder kombiniert speist und damit die Füllung des Speicherbehälters (22) während des Betriebs der Motorkompressoreinheit ermöglicht.

9. Niedertemperatur-Motorkompressoreinheit mit kontinuierlicher "kalter" Verbrennung bei konstantem Druck und mit aktiver Kammer nach Anspruch 8, **dadurch gekennzeichnet, dass** ein Vorverdichter (36) vor der Einleitung der Arbeitsdruckluft in den Speicherbehälter (22) installiert ist, der es ermöglicht, in Betrieb gleichzeitig den Speicherbehälter unter hohem Druck zu füllen und den Brennraum (19) unter einem weniger hohen Druck zu speisen.

10. Niedertemperatur-Motorkompressoreinheit mit kontinuierlicher "kalter" Verbrennung bei konstantem Druck und mit aktiver Kammer nach den vorhergehenden Ansprüchen 8 und 9, **gekennzeichnet durch** ihre Funktionsweise im Mono-Energie-Betrieb mit Arbeitsluft ohne Zuführung von äußerer Energie unter Verwendung der im Speicherbehälter (22) enthaltenen Luft, vorzugsweise **durch** eine dynamische Druckminderungsvorrichtung (21) auf einen mittleren Druck in dem Brennraum (19) entspannt wird, vor ihrer quasi-isothermen Übertragung in die aktive Kammer (12, 13, 14), bei der Arbeit verrichtet wird, vor ihrer polytropen Entspannung im Arbeitszylinder (2), die ihrerseits Arbeit verrichtet. In diesem Falle wird dann der Arbeitsluftverdichter in den Leerlauf versetzt, indem die Einlass- und die Auslassleitung dieses Verdichters geschlossen gehalten werden, und der Verdichter der Kältemaschine nicht mehr angetrieben wird, während die Erwärmungsvorrichtung des Brennraums nicht aktiv ist.

11. Niedertemperatur-Motorkompressoreinheit mit kontinuierlicher "kalter" Verbrennung bei konstantem Druck und mit aktiver Kammer nach einem der vorhergehenden Ansprüche, **dadurch gekennzeichnet, dass** die Motorkompressoreinheit im Bi-Energie-Betrieb mit mehreren Betriebsmodi arbeitet, das heißt, im Mono-Energie-Betrieb mit Luft unter gewissen Einsatzbedingungen und/oder im Bi-Energie-Betrieb mit Druckluft aus dem Speicher (22) plus Verbrennung im Brennraum (19) und/oder im Mono-Energie-Betrieb mit Kraftstoff unter anderen Einsatzbedingungen.

12. Niedertemperatur-Motorkompressoreinheit mit kontinuierlicher "kalter" Verbrennung bei konstantem Druck und mit aktiver Kammer nach einem der obigen Ansprüche, **dadurch gekennzeichnet, dass** in Ergänzung oder anstelle des Brennraums ein thermischer Erwärmer (29) vorgesehen ist, welcher ein thermochemisches Verfahren einer Gas-Feststoff-Reaktion verwendet, das auf der Umwandlung eines in einem Verdampfer enthaltenen reaktiven Fluids, zum Beispiel von flüssigem Ammoniak, durch Verdampfung in ein Gas basiert, welches dann mit einem in einem Reaktor enthaltenen reaktiven Feststoff reagiert, zum Beispiel mit solchen Salzen, wie Chloriden von Calcium, Mangan, Barium oder anderen, deren chemische Reaktion Wärme erzeugt, und welches, wenn die Reaktion beendet ist, regeneriert werden kann, indem dem Reaktor Wärme zugeführt wird, um die Desorption des gasförmigen Ammoniaks hervorzurufen, welches dann im Verdampfer rekondensiert.

13. Niedertemperatur-Motorkompressoreinheit mit kontinuierlicher "kalter" Verbrennung bei konstantem Druck und mit aktiver Kammer nach einem der vorhergehenden Ansprüche, **dadurch gekennzeichnet, dass** der Brennraum mit einer sogenannten externen-externen Erwärmungsvorrichtung ausgestattet ist, in der die Druckluft über einen Wärmetauscher ohne direkten Kontakt mit der Flamme erwärmt wird.

14. Niedertemperatur-Motorkompressoreinheit mit kontinuierlicher "kalter" Verbrennung und mit aktiver Kammer nach Anspruch 13, **dadurch gekennzeichnet, dass** die aus dem Auslass des Motors (23) ausströmende Arbeitsluft in die Kältekammer (29) der Kältemaschine oder kryogenen Maschine A zurückgeführt wird, um einen neuen Zyklus zu beginnen und den Betrieb der Motorkompressoreinheit im geschlossenen Kreislauf zu ermöglichen.

15. Niedertemperatur-Motorkompressoreinheit mit kontinuierlicher "kalter" Verbrennung bei konstantem Druck und mit aktiver Kammer nach Anspruch 10, **dadurch gekennzeichnet, dass** für den Fall, dass die Auslasstemperatur des Motors höher als die Umgebungstemperatur ist, ein Luft/Luft-Wärmetauscher, der es ermöglicht, die Temperatur der Auslassluft praktisch auf die Umgebungstemperatur zu senken, in der Leitung vor der Kältekammer angeordnet ist.

16. Niedertemperatur-Motorkompressoreinheit mit kontinuierlicher "kalter" Verbrennung bei konstantem Druck und mit aktiver Kammer nach einem der obigen Ansprüche, **dadurch gekennzeichnet, dass** die Entspannungsvorrichtung mit aktiver Kammer durch ein herkömmliches Entspannungssystem wie etwa eine klassische Anordnung aus Kolben und Pleuelstange oder auch eine Umlaufantriebsvorrichtung ersetzt ist.

## Claims

1. Low-temperature, continuous "cold" combustion, constant pressure, active chamber motor-compressor unit, operating in particular with working compressed air and using a piston travel control device that stops the piston at top dead centre for a period of time, as well as an active chamber, consisting of a variable volume fitted with the means to produce work during filling, joined to and in permanent contact with the space contained above the main engine piston by means of a passage, as well as an integrated or non-characterized compression device:
- in that it includes a cold chamber (29) able to reduce to very low temperatures the atmospheric air that supplies the input of an air compression device, which then forces this working compressed air still at low temperatures into an external work capacity or combustion chamber (19) fitted with a constant pressure heating device (19A) where it (the working compressed air) will increase in volume before its quasi-isothermal transfer into an expansion device producing work, comprising preferably an active chamber itself **characterized:**
- **in that** when the engine piston (1) is stopped at top dead centre, the air or gas under pressure is admitted into the expansion chamber (12) when this is at its smallest volume and, under its thrust, it increases its volume and produces work,
- **in that** the compressed air contained in the expansion chamber then expands in the engine cylinder (2) thus pushing the engine piston (1) downwards along its travel and supplying work in turn,
- **in that** during the upwards travel of the engine piston (1) during the exhaust stroke, the variable volume in the expansion chamber is returned to its smallest volume to restart a complete work cycle.

2. Low-temperature, continuous "cold" combustion, constant pressure, active chamber motor-compressor unit according to Claim 1 **characterized in that** the compressed air returns to ambient temperature through a heat exchanger (35), preferably air-air, before being introduced into the external combustion chamber (19).

3. Low-temperature, continuous "cold" combustion, constant pressure, active chamber motor-compressor unit according to Claims 1 and 2 **characterized by** its thermodynamic cycle comprising:
- A lowering of the atmospheric air temperature
- Suction
- Compression
- Temperature increase
- Quasi-isothermal transfer at constant pressure
- Polytropic expansion
- Exhaust at ambient pressure.

4. Low-temperature, continuous "cold" combustion, constant pressure, active chamber motor-compressor unit according to Claims 1 to 3 **characterized in that** the working air is very strongly cooled in the cold chamber of a refrigerating or cryogenic system (A) using heat-absorbing vaporizing liquids, where an initially gaseous refrigerant or cryogenic liquid is compressed using a cryogenic compressor (31) and forced into a coil (32) where it liquefies, this liquefaction releases heat, and the liquid is then introduced into an evaporator (30) positioned in the cold chamber (29) where it vaporizes (heat-absorbing phenomenon). The vapour thus produced returns to the compressor and the cycle can restart, maintaining the cold chamber at very low temperatures.

5. Low-temperature, continuous "cold" combustion, constant pressure, active chamber motor-compressor unit according to Claims 1, 3 and 4, **characterized in that** the air compressed by the air compressor (28,25,26,33), still at low temperature, is directed into a large-volume, high-pressure storage reservoir (22) where, according to its relative volume and the storage time, it returns to almost ambient temperature. It is then expanded, preferably through a dynamic pressure-reducing valve (21), to an average working pressure in the combustion chamber (19), where it is heated and its volume increased considerably, before its quasi-isothermal transfer into the active chamber, producing work before its polytropic expansion in the engine cylinder (2), in turn producing work.

6. Low-temperature, continuous "cold" combustion, constant pressure, active chamber motor-compressor unit according to Claim 5, **characterized in that** the air compressed by the air compressor crosses an air-air heat exchanger (35A) to raise its temperature and increase its volume before it is introduced into the storage reservoir (22).

7. Low-temperature, continuous "cold" combustion, constant pressure, active chamber motor-compressor unit according to Claims 5 and 6, **characterized by** its thermodynamic cycle comprising:
- A lowering of the temperature of the input air
- Suction
- Compression
- A return to ambient.
- A quasi-isothermal transfer
- Temperature increase (combustion at constant volume)
- Quasi-isothermal transfer at constant pressure
- Polytropic expansion
- Exhaust at ambient pressure.

8. Low-temperature, continuous "cold" combustion, constant pressure, active chamber motor-compressor unit according to any one of the Claims 1 to 7, **characterized in that** the working air compressor (28,25,26,33) supplies the storage reservoir (22) and the combustion chamber (19), either successively or in combination, allowing the storage reservoir (22) to be filled while the unit is operating.

9. Low-temperature, continuous "cold" combustion, constant pressure, active chamber motor-compressor unit according to Claim 8, **characterized in that** a supercharger (36) is installed before the working compressed air is introduced into the storage reservoir (22), allowing, during operation, the storage reservoir to be filled at high pressure and simultaneously, the combustion chamber (19) to be supplied at a lower pressure.

10. Low-temperature, continuous "cold" combustion, constant pressure, active chamber motor-compressor unit according to any one of the preceding claims, **characterized by** its operation in mono-energy, working air, without an external energy supply, by using the air contained in the storage reservoir (22), expanded preferably through a dynamic pressure-reducing valve (21) to an average pressure in the combustion chamber (19), before its quasi-isothermal transfer in the active chamber (12,13,14) producing work, before its polytropic expansion in the engine cylinder (2) producing work in turn. In this case, the working air compressor is then placed in dry run position, with the input and exhaust ducts of the said compressor kept closed, the compressor of the refrigerating system no longer driven and the heating device of the combustion chamber not activated.

11. Low-temperature, continuous "cold" combustion, constant pressure, active chamber motor-compressor unit according to any one of the preceding claims, **characterized in that** the unit operates in bi-energy multi-modes, that is, in mono-energy air in some operating conditions, and/or in bi-energy stored compressed air (22) plus combustion in the combustion chamber (19) and/or in mono-energy fuel in other operating conditions.

12. Low-temperature, continuous "cold" combustion, constant pressure, active chamber motor-compressor unit according to any one of the claims above, **characterized in that**, in addition to or in place of the combustion chamber, is positioned a thermal heater (29) which uses a thermochemical gas-solid reaction process based on the transformation by evaporation of a reagent fluid contained in an evaporator, for example, liquid ammonium or a gas which reacts with a solid reagent contained in a reactor (38), for example, salts such as calcium, magnesium or barium chlorides or others whose chemical reaction produces heat and which, when the reaction has finished can be regenerated by heating the reactor which causes the desorption of the gaseous ammonium which recondenses in the evaporator.

13. Low-temperature, continuous "cold" combustion, constant pressure, active chamber motor-compressor unit according to any one of the preceding claims, **characterized in that** the combustion chamber is fitted with a heating device known as external-external, where the compressed air is heated by a heat exchanger without direct contact with the flame.

14. Low-temperature, continuous "cold" combustion, active chamber motor-compressor unit according to claim 13, **characterized in that** the working air coming out of the engine exhaust (23) is recycled in the cold chamber (29) of the refrigerating or cryogenic system A to restart a new cycle, allowing the unit to operate in a closed cycle.

15. Low-temperature, continuous "cold" combustion, constant pressure, active chamber motor-compressor unit according to claim 10, **characterized in that**, and for the case where, the engine exhaust temperature is greater than the ambient temperature, an air-air heat exchanger to return the exhaust air temperature to almost ambient is placed on the duct before the cold chamber.

16. Low-temperature, continuous "cold" combustion, constant pressure, active chamber motor-compressor unit according to any one of the claims above, **characterized in that** the active chamber expansion device uses a conventional expansion system, such as standard piston, connecting rod and crank, or even a rotary engine device.
